# EUROPEAN PATENT SPECIFICATION

(11) **EP 4 206 441 B1**
(45) Date of publication and mention of the grant of the patent: **27.11.2024**
(21) Application number: 21425077.1
(22) Date of filing: 30.12.2021
(51) Int. Cl.: F01D 11/00

(54) **STATOR ASSEMBLY FOR A COMPRESSOR OF A GAS TURBINE ASSEMBLY AND COMPRESSOR FOR A GAS TURBINE ASSEMBLY**
STATORANORDNUNG FÜR EINEN VERDICHTER EINER GASTURBINENANORDNUNG UND VERDICHTER FÜR EINE GASTURBINENANORDNUNG
ENSEMBLE STATOR POUR UN COMPRESSEUR D'UN ENSEMBLE DE TURBINE À GAZ ET COMPRESSEUR POUR UN ENSEMBLE DE TURBINE À GAZ

(43) Date of publication of application: 05.07.2023
(73) Proprietor: ANSALDO ENERGIA S.p.A., 16152 Genova (IT)
(72) Inventor: Tappani, Marco, 16152 GENOVA (IT); Garbarino, Erika, 16152 GENOVA (IT)
(74) Representative: Studio Torta S.p.A.

(56) References cited:
- US-A1- 2019 360 350
- US-B1- 8 388 310
- US-B2- 10 851 662
- US-B2- 8 075 256

## Description

### TECHNICAL FIELD

The present invention relates to a stator assembly for a compressor of a gas turbine assembly and to a compressor for a gas turbine assembly comprising said stator assembly. In particular, the gas turbine assembly of the present invention is part of a plant for the production of electrical energy.

### BACKGROUND

As is known, a gas turbine assembly for power plants comprises a compressor, a combustor and a turbine.

In particular, the compressor comprises an inlet supplied with air and a plurality of rotating blades compressing the passing air. The compressed air leaving the compressor flows into a plenum, i.e. a closed volume delimited by an outer casing, and from there into the combustor. Inside the combustor, the compressed air is mixed with at least one fuel and combusted. The resulting hot gas leaves the combustor and expands in the turbine. In the turbine the hot gas expansion moves rotating blades connected to a rotor, performing work.

Both the compressor and the turbine comprise a plurality of stator assemblies axially interposed between rotor assemblies.

A plurality of inter-assembly cavities is defined between the stator assemblies and the rotor assemblies.

Each rotor assembly comprises a rotor disk rotating about a main axis and a plurality of blades supported by the rotor disk.

Each stator assembly comprises a plurality of stator vanes supported by a respective vane carrier and a stator ring arranged about the rotor without touching it.

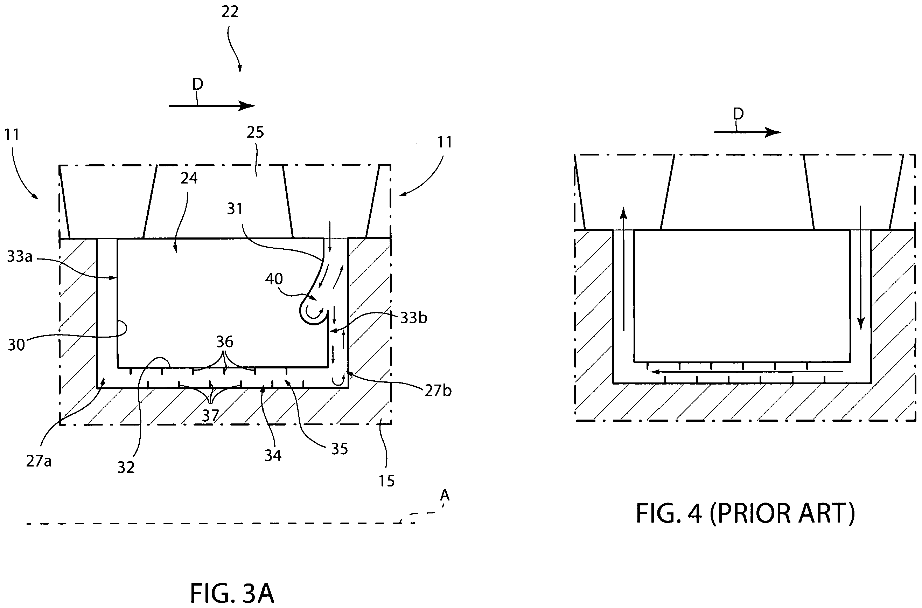

However, as the compressor provides positive pressure gradients along the main air flow direction, part of the compressed air flow enters the downstream inter-assembly cavity of the stator assembly, pass through the axial gap between the stator ring and the rotor and come back to the upstream inter-assembly cavity of the stator assembly (being at a pressure lower than the pressure of the downstream inter-assembly cavity) and finally is injected again in the main air flow upstream of the vane (see the arrows in fig.4 showing schematically a prior art solution).

The above backward recirculation negatively affects the compressor efficiency, generates pressure losses, and also deflects the main flow towards the leading edge of the vanes creating additional dangerous vorticity.

Sometimes, the discharge of said recirculated air flow upstream of the vane leading edge may induce flow separation at the vane leading edge, affecting also the compressor stability and operability.

A solution to reduce said backward recirculation is to arrange a labyrinth seal between the rotor and the stator ring to avoid communication between the inter-assembly cavities (see fig 4 showing a prior art solution). However, the efficiency of this device is strongly affected by the clearance gap variation between the labyrinth seal teeth. In general, in order to satisfy all transient condition during the engine operation preventing teeth rubbing, such clearance is quite high, and the labyrinth seal cannot avoid the backward flow recirculation.

US 10 851 662 B2 discloses a prior art stator assembly for a compressor of a gas turbine assembly.

### SUMMARY

The object of the present invention is therefore to provide a stator assembly for a compressor of a gas turbine assembly, which enables avoiding or at least mitigating the described drawbacks.

In particular, it is an object of the present invention to provide a stator assembly having an improved structure able to minimize the amount of air recirculating about the stator ring through the inter-assembly cavities.

According to said objects the present invention relates to a stator assembly for a compressor of a gas turbine assembly wherein air flows along a direction D; the stator assembly comprising a stator ring, which extends about a longitudinal axis and comprises a leading wall and a trailing wall; the leading wall being arranged upstream of the trailing wall along the air flow direction; the trailing wall being is shaped so as to define an open cavity.

Advantageously, the open cavity in the trailing wall prevents the backward recirculation around the stator ring of the compressor.

The cavity promote local vorticity inside blocking the air flowing towards the axial gap. The generated vorticity acts also as an aero-dynamical barrier to limit itself the quantity of air entering the trailing inter-assembly cavity.

It is also an object of the present invention to provide an efficient compressor for a gas turbine assembly, wherein the amount of air recirculating about the stator ring through the inter-assembly cavities is minimized. According to said objects the present invention relates to a compressor of a gas turbine assembly as claimed in claim 11.

### BRIEF DESCRIPTION OF THE DRAWINGS

The present invention will now be described with reference to the accompanying drawings, which illustrate some non-limitative embodiment, in which:
- Figure 1 is a schematic sectional front view, with parts removed for clarity, of a gas turbine assembly comprising a compressor according to the present invention;
- Figure 2 is a schematic sectional front view, with parts removed for clarity, of a stator assembly according to the present invention;
- Figure 3A is a schematic sectional front view, with parts removed for clarity, of a detail of the stator assembly of Figure 2;
- Figure 3B is a schematic sectional front view, with parts removed for clarity, of an enlarged portion of the detail of Figure 3A;
- Figure 4 is a schematic sectional front view, with parts removed for clarity, of the detail of figure 3 according a prior art solution not part of the present invention.

### DETAILED DESCRIPTION OF EXEMPLARY EMBODIMENTS

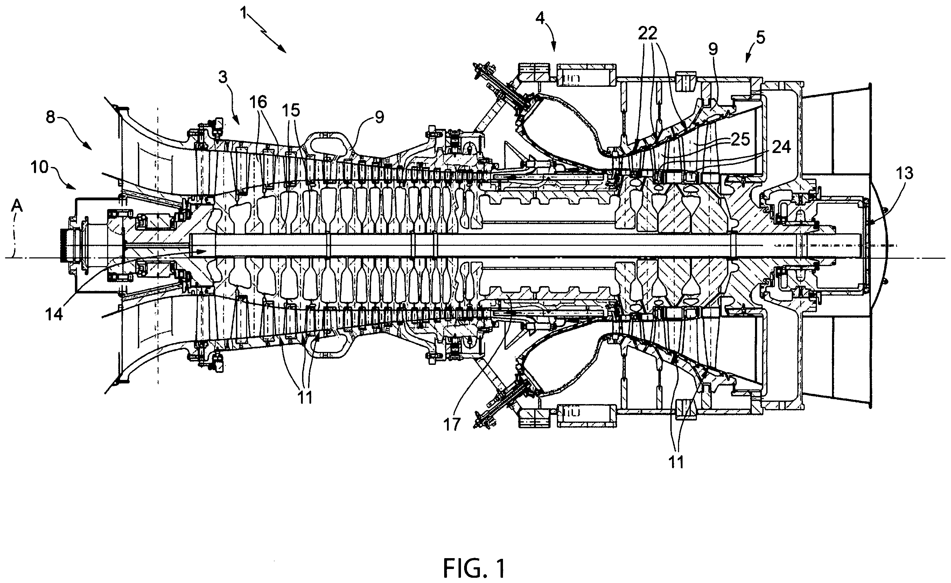

In figure 1 reference numeral 1 indicates a gas turbine assembly (schematically shown in Figure 1).

The gas turbine assembly 1 comprises a compressor 3, a combustion chamber 4, a gas turbine 5 and a generator (for simplicity, not shown in the attached figures).

The compressor 3, turbine 5 and generator (not shown) are mounted on the same shaft to form a rotor 8, which is housed in stator casings 9 and extends along an axis A.

In greater detail, the rotor 8 comprises a front shaft 10, a plurality of rotor assemblies 11 and a rear shaft 13.

Each rotor assembly 11 comprises a rotor disk 15 and a plurality of rotor blades 16 coupled to the rotor disk 15 and radially arranged.

The plurality of rotor disks 15 are arranged in succession between the front shaft 10 and the rear shaft 13 and preferably clamped as a pack by a central tie rod 14. As an alternative, the rotor disks may be welded together.

A central shaft 17 separates the rotor disks 15 of the compressor 3 from the rotor disks 15 of the turbine 5 and extends through the combustion chamber 4.

Further, stator assemblies 22 are alternated with the compressor rotor assemblies 11.

Each stator assembly 22 comprises a stator ring 24 and a plurality of stator vanes 25, which are radially arranged and coupled to the stator ring 24 and to the respective stator casing 9.

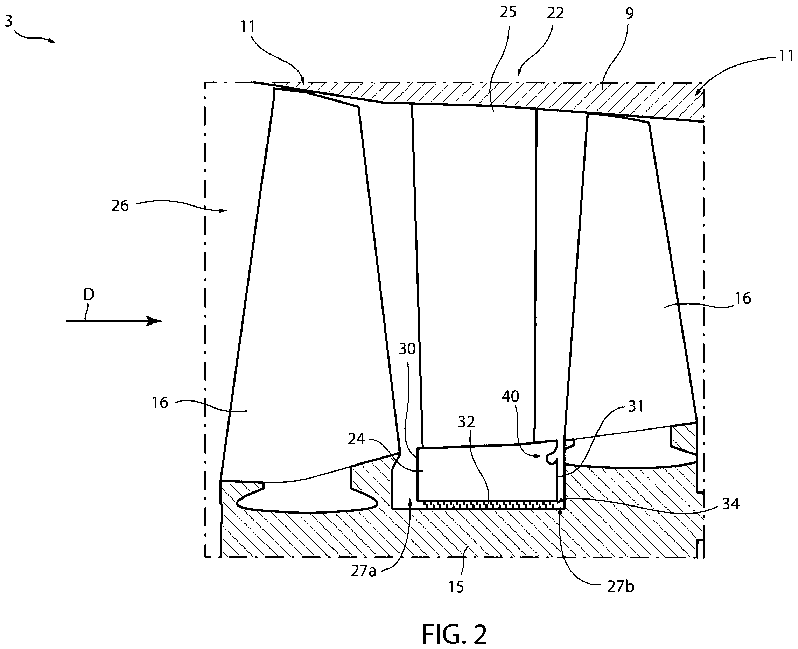

In figure 2 an enlarged view of a stator assembly 22 between two rotor assemblies 11 in the compressor 3 is shown.

Arrow D indicates the direction of the air flow flowing in a compression channel 26 of the compressor 3.

Between the rotor assemblies 11 and the stator assembly 22 inter-assembly cavities 27 are arranged.

In particular, each stator assembly 22 defines a leading inter-assembly cavity 27a and a trailing inter-assembly cavity 27b, wherein the leading inter-assembly cavity 27a is upstream of the trailing inter-assembly cavity 27b along the hot gas flow direction D.

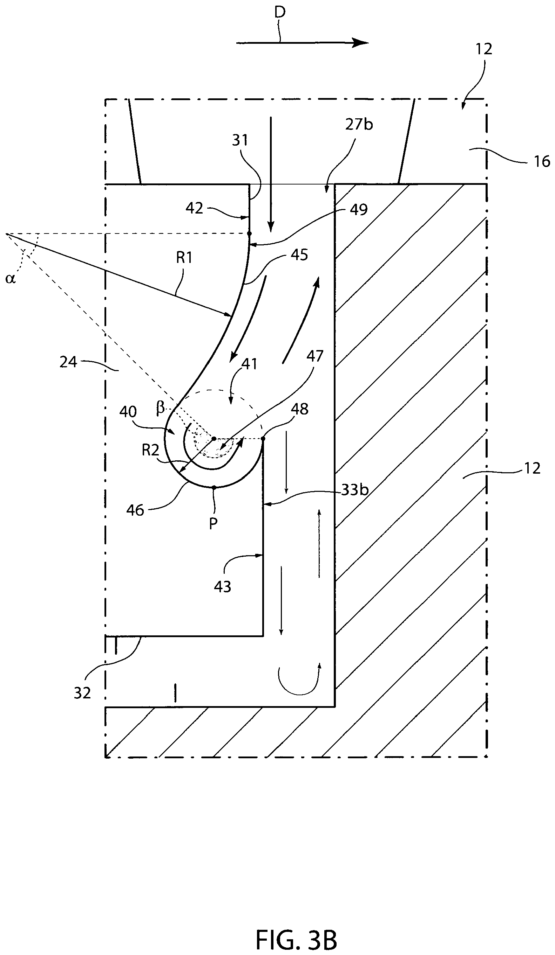

With reference to figure 2 and figure 3, the stator ring 24 extends about the respective rotor disk 15 without touching it.

In particular, the stator ring 24 comprises a leading wall 30, a trailing wall 31 and an axial wall 32 extending between the leading wall 30 and the trailing wall 31. The leading wall 30 is upstream of the trailing wall 31 along the air flow direction D.

Preferably, leading wall 30 and trailing wall 31 are radially arranged with respect to axis A. The leading wall 30 is provided with an annular leading face 33a and the trailing wall 31 is provided with an annular trailing face 33b.

Between the axial wall 32 of the stator ring 24 and the respective rotor disk 15 an axial gap 34 is present.

In said axial gap 34 a labyrinth seal 35 is arranged.

As schematically shown in figure 3A, the labyrinth seal 35 is defined by a plurality of teeth 36 protruding from the axial wall 32 and a plurality of opposite and staggered teeth 37 protruding from the respective rotor disk 15.

The plurality of stator vanes 25 are coupled alongside one another to the stator ring 24.

According to the invention, the trailing wall 31 is shaped so as to define a cavity 40 which has at least one opening 41 facing a rotating part of the rotor assembly 11. The rotating part of the rotor assembly can be a rotor disk 15 or a portion of a root of a rotor blade 16.

The cavity 40 is shaped so as to obtain a recirculation of the air entering the trailing inter-assembly cavity 27b.

In particular, the cavity 40 is an open cavity extending along an annular path on the annular trailing radial face 33b of the trailing wall 31.

With reference to the enlarged view of figure 3B, the annular trailing face 33b is provided with an outer planar portion 42 at the outer edge facing the inlet of the trailing inter-assembly cavity 27b and an inner planar portion 43 at the inner edge in contact with the axial wall 32. The outer planar portion 42 and the inner planar portion 43 are radially arranged.

The radial length of the outer planar portion 42 is preferably lower than the radial length of the inner planar portion 43.

According to a variant not shown, the radial length of the outer planar portion 42 can be substantially equal to the radial length of the inner planar portion 43.

The cavity 40 is arranged between the outer planar portion 42 and the inner planar portion 43.

In particular, the cavity 40 is defined by a concave portion 45 having at least one radius of curvature R1 and a convex portion 46 having at least one radius of curvature R2.

The concave portion 45 preferably extends so as to subtend an angle α comprised between 10°- 60°.

The convex portion 46 preferably extends so as to subtend an angle β comprised between 90° - 270°.

The convex portion 46 extends so to define a rounded section 47 of the cavity 40 for allowing air recirculating.

At the meeting between the inner planar portion 43 and the convex portion 46 a kick-out edge 48 is defined.

The kick-out edge 48 has a radial height (intended as the measure from the axis A along a radial direction) greater than the radial height of the innest point P of the convex portion 46.

The concave portion 45 defines an inlet edge 49.

According to a variant not shown, between the concave portion 45 and the convex portion 46 a further planar portion can be arranged, preferably radially arranged.

In use, the air coming from the compression channel 26 enters the trailing inter-assembly cavity 27b and is guided in the cavity 40 where circulates and is swirled towards the compression channel 26 as shown by the arrows in figure 3A and 3B.

In particular, the air coming from the compression channel 26 enters the trailing inter-assembly cavity 27b and is firstly deflected inward by the concave portion 45, then it is recirculated by the convex portion 46 to generate a vortex inside the rounded section 47 and finally it is ejected again in the trailing inter-assembly cavity 27b with a direction mostly opposite to the entering direction.

Eventually, it may happen that a small amount of air ejected from the cavity 40 impacts the rotating part of the rotor assembly 11 facing it and it is directed at lower radius towards the air gap 34. In this case, however, the strong pressure losses provided by the vortexes inside the cavity 40 and by the labyrinth seal 35 prevents the airflow to reach the leading inter-assembly cavity 27a and so to be ejected upstream of the vane 25.

In this way, an aerodynamic sealing barrier against back-flow recirculation around the compressor stator ring 24 is obtained. The sealing effect is stronger than the one obtained by traditional devices currently used as labyrinth seals (see fig. 4).

Moreover, the cavity 40 is not involved in any variation of the clearance in the axial gap 34. Therefore, it provides a constant and reliable sealing effectiveness during all operating conditions of the gas turbine assembly.

Finally, the shape and the dimensions of the cavity 40 do not affect the mechanical reliability of the stator ring 24 and, if needed, it can be also used to improve the static and modal response of the ring stator by modifying its mass.

Finally, it is clear that modifications and variants can be made to the stator assembly and to the compressor described herein without departing from the scope of the present invention, as defined in the appended claims.

## Claims

1. Stator assembly (22) for a compressor of a gas turbine assembly wherein air flows along a direction (D); the stator assembly comprising a stator ring (24), which extends about a longitudinal axis (A) and comprises a leading wall (30) and a trailing wall (31); the leading wall (30) being arranged upstream of the trailing wall (31) along the air flow direction (D); **characterized in that** the trailing wall (31) is shaped so as to define an open cavity (40).

2. Stator assembly according to claim 1, wherein the trailing wall (31) defines an annular trailing face (33b); the open cavity (40) extending along an annular path on the annular trailing face (33b) of the trailing wall (31).

3. Stator assembly according to any of the foregoing claims, wherein the cavity (40) comprises a rounded section (47) for promoting air recirculation.

4. Stator assembly according to claim 3, wherein the cavity (40) is defined by a concave portion (45) having at least one radius of curvature (R1) and at least one convex portion (46) having a radius of curvature (R2); the convex portion (46) comprising the rounded section (47).

5. Stator assembly according to claim 4, wherein the concave portion (45) extends so as to subtend an angle (α) comprised between 10°- 60°.

6. Stator assembly according to claim 4 or 5, wherein the convex portion (46) extends so as to subtend an angle (β) comprised between 90° - 270°.

7. Stator assembly according to any of claims 4-6, wherein the cavity (40) is provided with a kick-out edge (48); the kick-out edge (48) having a radial height greater than the radial height of the innest point (P) of the convex portion (46).

8. Stator assembly according to any of claims 3-7, wherein the annular trailing face (33b) is provided with an outer planar portion (42) and an inner planar portion (43); the cavity (40) being arranged between the outer planar portion (42) and the inner planar portion (43).

9. Stator assembly according to claim 8, wherein the outer planar portion (42) and the inner planar portion (43) are radially arranged.

10. Stator assembly according to claim 8 or 9, wherein the radial length of the outer planar portion (42) is lower than or equal to the radial length of the inner planar portion (43) .

11. Compressor for a gas turbine assembly extending along a longitudinal axis (A) and comprising:
- a compression channel (26) along which air flows in a direction (D);
- a plurality of rotor assemblies (11), each of which comprises a rotor disk (15) and a plurality of rotor blades (16) radially arranged and coupled to the rotor disk (15);
- a plurality of stator assemblies (22); the stator assemblies (22) and the rotor assemblies (11) being alternated along the axial direction (A) and spaced out from each other so as to define, for each stator assembly (22), a leading inter-assembly cavity (27a) and a trailing inter-assembly cavity (27b); wherein the leading inter-assembly cavity (27a) is upstream of the trailing inter-assembly cavity (27b) along the hot gas flow direction (D);
- at least one of the stator assemblies (22) being of the type claimed in anyone of the foregoing claims.

12. Compressor according to claim 11, wherein the stator ring (24) comprises an axial wall (32) extending between the leading wall (30) and the trailing wall (31); the stator ring (24) being arranged about a respective rotor disk (15) so as to leave an axial gap (34) between the axial wall (32) of the stator ring (24) and the respective rotor disk (15).

13. Compressor according to claim 12, comprising at least one labyrinth seal (35) in the axial gap (34).

## Patentansprüche

1. Statoranordnung (22) für einen Verdichter einer Gasturbinenanordnung, in der Luft entlang einer Richtung (D) strömt; wobei die Statoranordnung einen Statorring (24) umfasst, der sich um eine Längsachse (A) herum erstreckt und eine vordere Wand (30) und eine hintere Wand (31) umfasst; wobei die vordere Wand (30) entlang der Luftströmungsrichtung (D) stromaufwärts der hinteren Wand (31) angeordnet ist; **dadurch gekennzeichnet, dass** die hintere Wand (31) so geformt ist, dass sie einen offenen Hohlraum (40) definiert.

2. Statoranordnung nach Anspruch 1, wobei die hintere Wand (31) eine ringförmige hintere Fläche (33b) definiert; wobei sich der offene Hohlraum (40) entlang eines ringförmigen Weges auf der ringförmigen hinteren Fläche (33b) der hinteren Wand (31) erstreckt.

3. Statoranordnung nach einem der vorangehenden Ansprüche, wobei der Hohlraum (40) einen abgerundeten Abschnitt (47) zur Förderung einer Luftumwälzung umfasst.

4. Statoranordnung nach Anspruch 3, wobei der Hohlraum (40) definiert ist durch einen konkaven Abschnitt (45) mit wenigstens einem Krümmungsradius (R1) und wenigstens einen konvexen Abschnitt (46) mit einem Krümmungsradius (R2); wobei der konvexe Abschnitt (46) den abgerundeten Abschnitt (47) aufweist.

5. Statoranordnung nach Anspruch 4, wobei sich der konkave Abschnitt (45) über einen Winkel (α) zwischen 10° und 60° erstreckt.

6. Statoranordnung nach Anspruch 4 oder 5, wobei sich der konvexe Abschnitt (46) über einen Winkel (β) zwischen 90° und 270° erstreckt.

7. Statoranordnung nach einem der Ansprüche 4 bis 6, wobei der Hohlraum (40) mit einer Auswurfkante (48) versehen ist; wobei Auswurfkante (48) eine radiale Höhe aufweist, die größer ist als die radiale Höhe des innersten Punktes (P) des konvexen Abschnitts (46).

8. Statoranordnung nach einem der Ansprüche 3 bis 7, wobei die ringförmige hintere Fläche (33b) mit einem äußeren ebenen Abschnitt (42) und einem inneren ebenen Abschnitt (43) versehen ist; wobei der Hohlraum (40) zwischen dem äußeren ebenen Abschnitt (42) und dem inneren ebenen Abschnitt (43) angeordnet ist.

9. Statoranordnung nach Anspruch 8, wobei der äußere ebene Abschnitt (42) und der innere ebene Abschnitt (43) radial angeordnet sind.

10. Statoranordnung nach Anspruch 8 oder 9, wobei die radiale Länge des äußeren ebenen Abschnitts (42) kleiner oder gleich der radialen Länge des inneren ebenen Abschnitts (43) ist.

11. Verdichter für eine Gasturbinenanordnung, der sich entlang einer Längsachse (A) erstreckt und umfasst:
- einen Kompressionskanal (26), durch den Luft in einer Richtung (D) strömt;
- mehrere Rotoranordnungen (11), die jeweils eine Rotorscheibe (15) und mehrere radial angeordnete und mit der Rotorscheibe (15) gekoppelte Rotorschaufeln (16) umfassen;
- mehrere Statoranordnungen (22); wobei die Statoranordnungen (22) und die Rotoranordnungen (11) entlang der axialen Richtung (A) alternieren und voneinander beabstandet sind, um für jede Statoranordnung (22) einen vorderen Zwischenanordnungshohlraum (27a) und einen hinteren Zwischenanordnungshohlraum (27b) zu definieren; wobei der vordere Zwischenanordnungshohlraum (27a) entlang der Heißgasströmungsrichtung (D) stromaufwärts des hinteren Zwischenanordnungshohlraums (27b) liegt;
- wobei wenigstens eine der Statoranordnungen (22) von dem Typ ist, der in einem der vorangehenden Ansprüche beansprucht wird.

12. Verdichter nach Anspruch 11, wobei der Statorring (24) eine axiale Wand (32) umfasst, die sich zwischen der vorderen Wand (30) und der hinteren Wand (31) erstreckt; wobei der Statorring (24) so um eine jeweilige Rotorscheibe (15) angeordnet ist, dass ein axialer Spalt (34) zwischen der axialen Wand (32) des Statorrings (24) und der entsprechenden Rotorscheibe (15) verbleibt.

13. Verdichter nach Anspruch 12, der wenigstens eine Labyrinthdichtung (35) im axialen Spalt (34) umfasst.

## Revendications

1. Ensemble stator (22) pour un compresseur d'un ensemble turbine à gaz dans lequel l'air s'écoule le long d'une direction (D); l'ensemble stator comprenant un anneau de stator (24), qui s'étend autour d'un axe longitudinal (A) et comprend une paroi avant (30) et une paroi arrière (31); la paroi avant (30) étant disposée en amont de la paroi arrière (31) le long de la direction d'écoulement de l'air (D); **caractérisé en ce que** la paroi arrière (31) est conformée de manière à définir une cavité ouverte (40).

2. Ensemble stator selon la revendication 1, dans lequel la paroi arrière (31) définit une face arrière annulaire (33b); la cavité ouverte (40) s'étendant le long d'un trajet annulaire sur la face arrière annulaire (33b) de la paroi arrière (31).

3. Ensemble stator selon l'une quelconque des revendications précédentes, dans lequel la cavité (40) comprend une section arrondie (47) pour favoriser la recirculation de l'air.

4. Ensemble stator selon la revendication 3, dans lequel la cavité (40) est définie par une partie concave (45) ayant au moins un rayon de courbure (R1) et au moins une partie convexe (46) ayant un rayon de courbure (R2); la partie convexe (46) comprenant la section arrondie (47).

5. Ensemble stator selon la revendication 4, dans lequel la partie concave (45) s'étend de manière à sous-tendre un angle (α) compris entre 10° et 60°.

6. Ensemble stator selon la revendication 4 ou 5, dans lequel la partie convexe (46) s'étend de manière à sous-tendre un angle (β) compris entre 90° et 270°.

7. Ensemble stator selon l'une quelconque des revendications 4 à 6, dans lequel la cavité (40) est munie d'un bord d'éjection (48); le bord d'éjection (48) ayant une hauteur radiale supérieure à la hauteur radiale du point le plus interne (P) de la partie convexe (46).

8. Ensemble stator selon l'une quelconque des revendications 3 à 7, dans lequel la face arrière annulaire (33b) est munie d'une partie plane externe (42) et d'une partie plane interne (43); la cavité (40) étant disposée entre la partie plane externe (42) et la partie plane interne (43).

9. Ensemble stator selon la revendication 8, dans lequel la partie plane externe (42) et la partie plane interne (43) sont disposées radialement.

10. Ensemble stator selon la revendication 8 ou 9, dans lequel la longueur radiale de la partie plane externe (42) est inférieure ou égale à la longueur radiale de la partie plane interne (43).

11. Compresseur pour un ensemble turbine à gaz s'étendant le long d'un axe longitudinal (A) et comprenant:
- un canal de compression (26) le long duquel l'air s'écoule dans une direction (D);
- une pluralité d'ensembles rotors (11), dont chacun comprend un disque de rotor (15) et une pluralité de pales de rotor (16) disposées radialement et couplées au disque de rotor (15);
- une pluralité d'ensembles stators (22); les ensembles stators (22) et les ensembles rotors (11) étant alternés le long de la direction axiale (A) et espacés les uns des autres de manière à définir, pour chaque ensemble stator (22), une cavité inter-ensembles avant (27a) et une cavité inter-ensembles arrière (27b); dans lequel la cavité inter-ensembles avant (27a) est en amont de la cavité inter-ensembles arrière (27b) le long de la direction d'écoulement des gaz chauds (D);
- au moins l'un des ensembles stators (22) étant du type revendiqué dans l'une quelconque des revendications précédentes.

12. Compresseur selon la revendication 11, dans lequel l'anneau de stator (24) comprend une paroi axiale (32) s'étendant entre la paroi avant (30) et la paroi arrière (31); l'anneau de stator (24) étant disposé autour d'un disque de rotor (15) respectif de manière à laisser un interstice axial (34) entre la paroi axiale (32) de l'anneau de stator (24) et le disque de rotor (15) respectif.

13. Compresseur selon la revendication 12, comprenant au moins un joint labyrinthe (35) dans l'interstice axial (34).
